(19) Europäisches Patentamt
European Patent Office
Office européen des brevets

(11) EP 3 753 914 B1

(12) **EUROPEAN PATENT SPECIFICATION**

(45) Date of publication and mention of the grant of the patent:
**07.06.2023 Bulletin 2023/23**

(21) Application number: **19754828.2**

(22) Date of filing: **02.02.2019**

(51) International Patent Classification (IPC):
***C05B 7/00*** *(2006.01)* ***C05F 11/00*** *(2006.01)*
***C05B 9/00*** *(2006.01)*

(52) Cooperative Patent Classification (CPC):
(C-Sets available)
**C05B 7/00; C05B 9/00; C05F 11/00** (Cont.)

(86) International application number:
**PCT/CN2019/074613**

(87) International publication number:
**WO 2019/158009 (22.08.2019 Gazette 2019/34)**

(54) **COMPOSITE FERTILIZER CONTAINING MAGNESIUM AMMONIUM PHOSPHATE AND POLYGLUTAMIC ACID**

ZUSAMMENGESETZTER DÜNGER MIT MAGNESIUMAMMONIUMPHOSPHAT UND POLYGLUTAMINSÄURE

ENGRAIS COMPOSITE CONTENANT DU PHOSPHATE D'AMMONIUM DE MAGNÉSIUM ET DE L'ACIDE POLYGLUTAMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.02.2018 CN 201810147637**

(43) Date of publication of application:
**23.12.2020 Bulletin 2020/52**

(73) Proprietor: **Jiangsu Huifeng Bio Agriculture Co., Ltd.**
**Yancheng, Jiangsu 224100 (CN)**

(72) Inventors:
- **ZHONG, Hangen**
  **Yancheng, Jiangsu 224005 (CN)**
- **JI, Hongjin**
  **Yancheng, Jiangsu 224005 (CN)**
- **ZHANG, Ming**
  **Yancheng, Jiangsu 224005 (CN)**
- **LUO, Lijuan**
  **Yancheng, Jiangsu 224005 (CN)**
- **WANG, Ying**
  **Yancheng, Jiangsu 224005 (CN)**
- **WANG, Ying**
  **Yancheng, Jiangsu 224005 (CN)**
- **WEI, Jianfeng**
  **Yancheng, Jiangsu 224005 (CN)**

(74) Representative: **Engelhard, Markus**
**Boehmert & Boehmert Anwaltspartnerschaft mbB**
**Pettenkoferstrasse 22**
**80336 München (DE)**

(56) References cited:
**WO-A1-98/30100**
**CN-A- 101 857 500**
**CN-A- 104 163 711**
**CN-A- 104 163 711**
**CN-A- 105 432 291**
**CN-A- 106 699 450**
**CN-A- 108 456 056**
**CN-B- 101 391 928**
**CN-B- 103 172 437**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C05B 7/00, C05F 11/00;**
**C05F 11/00, C05B 7/00, C05D 9/02, C05F 11/08**

## Description

## BACKGROUND

### Technical Field

The present invention belongs to the technical field of agricultural fertilizers, and relates to a functional composite fertilizer, and in particular to a composite fertilizer containing magnesium ammonium phosphate and polyglutamic acid.

### Related Art

Magnesium ammonium phosphate, also known as struvite for its earliest discovery in bird manure, is a white inorganic crystalline mineral, orthorhombic system, with crystals usually in the form of axes, wedges, short columns or thick plates. The relative density is 1.71, the relative molecular mass is 245.43, the solubility in cold water is rather low, it is easy to dissolve in hot water and dilute acid, it is insoluble in ethanol, and it decomposes in alkali solution. The magnesium ammonium phosphate is small in solubility, does not damage the root system of crops, and can meet the nutrient requirements of the crops in different periods, promote the growth of the crops, enhance the disease resistance of the crops, improve the yield and quality of melons, fruits, vegetables, flowers and the like, enable the fruits of the crops to be bright in color, mellow in taste, rich in nutrition and reduce environmental pollution. Researches made by many scholars have indicated that magnesium ammonium phosphate is an excellent slow-release fertilizer and has good effect in agricultural application.

$\gamma$-poly-glutamic acid (short for $\gamma$-PGA), also known as natto gum and polyglutamic acid, is a kind of water-soluble, biodegradable, non-toxic biopolymer prepared by microbial fermentation. Polyglutamic acid is a kind of homopolymerized amino acid formed by polymerizing glutamic acid monomers through amido bonds, has the advantages of excellent biodegradability, super adsorption, no toxicity and the like, and has multiple effects of reducing the loss of fertilizer nutrients, improving the utilization rate of the

fertilizer, regulating the growth of plants and the like when being added into a composite fertilizer. The polyglutamic acid has obvious application effects on plants such as rice, wheat, corn, vegetables, fruit trees, flowers and the like, and can obviously improve crop yield. Some fertilizer compositions comprising polyglutamic acid and/or magnesium ammonium phosphate are disclosed in CN 105 432 291 A, CN 103 172 437 B, CN 101 391 928 B and CN 104 163 711 A.

At present, in the process of agricultural crop planting, due to long-term unreasonable use of fertilizers and pesticides, such as chemical application of elementary substances such as high nitrogen and high phosphorus to regulate crop growth and improve crop yield, and long-term application of chemical phosphorus-containing pesticides, the concentration of single nutrients in soil is too high, which not only cause excessive stock of phase reaction in the soil, but also produce harmful substances in the soil, and become a main factor that causing soil hardening in some areas, resulting in decline of crop yield, reduction of quality of crops, which violates the natural development law of the soil ecological environment, so that it is an important means for the fertilizer industry to achieve sustainable development to create novel fertilizers, reasonably apply the fertilizers, improve the comprehensive utilization efficiency of the fertilizers and activate the soil life.

## SUMMARY

The technical problem to be solved by the present invention is to provide a safe and environment-friendly composite fertilizer aiming at the defects in the prior art. The inventors have found that both polyglutamic acid and magnesium ammonium phosphate have a significant synergistic effect on promoting plant growth and increasing crop yield. Meanwhile, both of the two have good complementary effects on the aspects of providing nutrient absorption and utilization for crops.

Another objective of the present invention is to provide a preparation method of a composite fertilizer containing polyglutamic acid and magnesium ammonium phosphate and application thereof in promoting plant growth and improving crop yield in the agricultural field.

**The objectives of the present invention can be achieved by the following measures:**

A composite fertilizer includes two functional components of polyglutamic acid and magnesium ammonium phosphate. A weight ratio of the polyglutamic acid to the magnesium ammonium phosphate is 1: 100 to 10000. In a preferred embodiment, in order to make the effect more obvious, the weight ratio of the two is further preferably 1: 150 to 8000.

Further, according to the use of the present invention, the composite fertilizer can be applied as a trace element fertilizer with a weight ratio of the polyglutamic acid to the magnesium ammonium phosphate of 1: 100 to 1200, preferably 200 to 1000. When the composite fertilizer is used as a base fertilizer or topdressing, the weight ratio of the polyglutamic acid to the magnesium ammonium phosphate is 1: 1000 to 10000, preferably 1: 1500 to 8000.

In one technical solution of the present invention, in order to improve fertilizer effect and activate soil, a microbial agent or a mixture of more than one known microbial agents can be added. Suitable microorganisms include, but are not limited to, *bacillus subtilis, trichoderma harzianum, rhizobium, bacillus thuringiensis, paecilomyces lilacinus,* preferably *bacillus subtilis* and *trichoderma harzianum.* In the present invention, a total effective viable count is greater than 20 million/gram, and in order to further improve the use effect, it is preferable that the total effective viable count of microbial bacteria is greater than 200 million/gram, and it is further preferable that the total effective viable count of microbial bacteria is greater than 1 billion/gram.

Further, an organic matter is contained in the composite fertilizer containing polyglutamic acid and magnesium ammonium phosphate. A content of the organic matter is greater than 8%, and preferably greater than 20%. Suitable organic matter includes, but is not limited to, one or a mixture of more of cellulose, hemicellulose, proteins, humic acids, lipids, asphaltenes, resins and gums, tannins, steroids, vitamins, terpenes, and humins. Or fertilizers containing organic matters (such as livestock manure, municipal waste organic matters, sludge, straw, sawdust, food processing wastes and the like) and substances containing organic matters (turf, weathered coal, lignite, humic acid and the like), and microbial agents or substances stimulating growth, such as urea and the like can also be added.

When the fertilizer is used as a trace element fertilizer, other macro elements, medium elements or trace elements can be added compositely. According to the growth requirements of different crops and soil moisture, different kinds or quantities of trace elements are added or mixed and applied.

In the present invention, the trace elements refer to essential nutrient elements for plant growth, including 11 kinds of sulfur, potassium, calcium, iron, manganese, zinc, copper, boron, molybdenum, chlorine and nickel, and in addition, some plants also need silicon, sodium and cobalt, which are called beneficial elements.

The potassium fertilizer includes, but is not limited to, potassium chloride, potassium sulfate, monopotassium phosphate, sylvite, potassium magnesium salt, carnallite, potassium nitrate or kiln dust potassium fertilizer and the like, preferably monopotassium phosphate.

The manganese fertilizer includes, but is not limited to, manganese sulfate, manganese chloride or organic chelated manganese and the like.

The iron fertilizer includes, but is not limited to, an inorganic iron fertilizer, an organic iron fertilizer, or a chelated iron fertilizer. Suitable inorganic iron fertilizers may include ferrous sulfate, ferric sulfate, ferric oxide, ferrous carbonate, or ferrous ammonium phosphate monohydrate; suitable organic iron fertilizers include hexaurea iron trinitrate or diamine iron fulvate.

The copper fertilizers include, but are not limited to, copper sulfate, cuprous oxide, chelated copper or copper-containing slag, and the like.

The boron fertilizers include, but are not limited to, borax or boric acid.

The zinc fertilizers include, but are not limited to, zinc sulfate, zinc oxide, zinc nitride, or chelated zinc, preferably zinc sulfate.

The sulfur fertilizers include, but are not limited to, ammonium sulfate, calcium superphosphate, potassium sulfate, or a sulfur fertilizer, and the sulfur fertilizer may include ammonium thiosulfate, sulfur-urea, or liquid sulfur dioxide.

The cobalt fertilizers include, but are not limited to, cobalt sulfate, cobalt chloride, or chelated cobalt fertilizers (e.g., humic acid-chelated cobalt fertilizers, fulvic acid-chelated cobalt fertilizers, sugar alcohol type cobalt fertilizers and the like).

The silicon fertilizers include, but are not limited to, silicon ore, silicate or citrate-soluble mineral fertilizers containing calcium silicate as the main component.

The calcium fertilizers include, but are not limited to, lime (including quicklime, slaked lime, limestone powder and the like) or calcium phosphate fertilizers, such as calcium magnesium phosphate fertilizer, calcium superphosphate and the like, and some of calcium nitrogen fertilizers such as calcium nitrate, lime nitrogen and the like, as well as dolomite (including complex calcium salts of calcium carbonate and magnesium carbonate) and calcined products thereof (calcium oxide and calcium hydroxide).

The macro elements, medium elements or trace elements are comprehensively considered to be added according to characteristics of the crops, soil moisture and environmental characteristics, and application technologies of the elements are all public technologies in the industry.

Polyglutamic acid (PGA) is mainly formed by polymerizing D-glutamic acid and L-glutamic acid through amide bonds, and is mainly includes two constructions due to different polymerization modes: $\alpha$-polyglutamic acid (polymerized by $\alpha$-amide bond, $\alpha$-PGA) and $\gamma$-polyglutamic acid (polymerized by $\gamma$-amide bond, $\gamma$-PGA), the form of polyglutamic acid in the present invention is $\gamma$-polyglutamic acid, which is "polyglutamic acid" for short (the structural formula thereof is shown below) in the present invention.

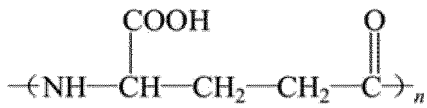

Structure of γ-polyglutamic acid (γ-PGA)

The polyglutamic acid in the present invention can be a γ-polyglutamic acid solution, or a γ-polyglutamic acid pure product or a salt pure product thereof, and can also be a fermentation culture containing γ-polyglutamic acid, or γ-polyglutamic acid powder containing a fermentation bacterial agent; based on the γ-polyglutamic acid contained therein, the γ-polyglutamic acid has an average molecular weight of 20-3000 KDa, and the γ-polyglutamic acid solution is preferred.

Through experiments, the inventors found that the composite fertilizer containing polyglutamic acid and magnesium ammonium phosphate can better regulate the growth of crops, promote the health effect of the crops and increase the yield of the crops.

The present invention provides application of a composition comprising a component A (magnesium ammonium phosphate) and a component B (polyglutamic acid) in regulating the growth of crops in the agricultural field, and particularly has a remarkable application effect in improving the yield of crops.

According to the present invention, the polyglutamic acid and the magnesium ammonium phosphate are combined to have hydrophilic and water-retaining properties, so that a layer of film can be formed on the surface layer of plant root hairs, on one hand, the root hairs are protected, on the other hand, fertilizer loss can be slowed down, and meanwhile, the acid-base value of soil can be effectively balanced. Meanwhile, in the composition, polyglutamic acid is a biodegradable polypeptide macromolecular polymer, is safe and environment-friendly, can be gradually degraded into glutamic acid required by plant growth regulation by microorganisms in a natural soil environment, and can effectively promote crop growth, improve the disease resistance, improve the quality and increase the yield.

In order to give full play to the advantageous effects of the present invention, the composition of the present invention can also be mixed with other pesticides (such as bactericides, insecticides, herbicides, plant growth regulators), fertilizers and the like, all of which are commonly used pesticides or fertilizers disclosed in the prior art.

The composite fertilizer is of a solid shape. Depending on the subject to be applied, it may be processed into granular, tablet, particulate or powder forms, preferably granular and powder forms.

In one processing technical solution of the present invention, the method includes the following steps: (1) pulverizing magnesium ammonium phosphate into 210-841 microns (20-70 meshes); (2) granulating, oven drying and cooling the pulverized magnesium ammonium phosphate; (3) evenly spraying polyglutamic acid liquid according to a weight ratio of polyglutamic acid to magnesium ammonium phosphate of 1:100 to 10000; (4) oven drying the fertilizer granules; and (5) quantitatively packaging to obtain the granular composite fertilizer.

Alternatively, (1) pulverizing magnesium ammonium phosphate into 210-841 microns (20-70 meshes); (2) evenly spraying polyglutamic acid liquid according to a weight ratio of polyglutamic acid to pulverized magnesium ammonium phosphate of 1:100 to 10000; (3) oven drying; and (4) quantitatively packaging to obtain the composite fertilizer powder.

In another processing technical solution of the present invention, the microbial agent can be added to obtain the compound microbial fertilizer, and the processing method specifically includes the following steps: (1) pulverizing magnesium ammonium phosphate into 210-841 microns (20-70 meshes); (2) granulating, oven drying and cooling the pulverized magnesium ammonium phosphate; (3) evenly spraying polyglutamic acid liquid according to a weight ratio of polyglutamic acid to magnesium ammonium phosphate of 1:100 to 10000; (4) evenly mixing one or more microbial agents of purchased or cultured *bacillus subtilis, trichoderma harzianum, rhizobium, bacillus thuringiensis* and *paecilomyces lilacinus,* evenly mixing and stirring the microbial agent and polyglutamic acid-magnesium ammonium phosphate granules, so that the effective viable count per gram of fertilizer is not less than 20 million (preferably not less than 200 million per gram of fertilizer); (5) oven drying the fertilizer granules; and 6) quantitatively packaging to obtain the granular compound microbial fertilizer.

In the processing technical solution, organic matters can be added after step 4, the content of the organic matters is higher than 8%, and the organic matters are preferably cellulose, hemicellulose, protein and humic acid.

In one processing technical solution, alternatively, (1)directly pulverizing magnesium ammonium phosphate into 210-841 microns (20-70 meshes); (2) evenly spraying polyglutamic acid liquid according to a weight ratio of polyglutamic acid to magnesium ammonium phosphate of 1: 100 to 10000; (3) evenly mixing one or more microbial agents of purchased or cultured *bacillus subtilis, trichoderma harzianum, rhizobium, bacillus thuringiensis* and *paecilomyces lilacinus,* evenly mixing and stirring the microbial agent and polyglutamic acid-magnesium ammonium phosphate granules, so that the effective viable count per gram of fertilizer is not less than 20 million (preferably not less than 200 million per gram of fertilizer); (4) oven drying the fertilizer; and (5) quantitatively packaging to obtain the compound microbial fertilizer powder.

In the powder processing technical solution, organic matters can be added after step 3, the content of the organic matters is higher than 8%, and the organic matters are preferably cellulose, hemicellulose, protein and humic acid.

In another processing technical solution, according to the actual soil structure and different crop growth requirements, a proper amount of macro elements, medium elements and trace elements can be added to obtain the compound microbial fertilizer, the specific processing method includes the following steps: (1) according to the requirements of crops, selecting a proper amount of macro elements, medium elements or trace elements types, and pulverizing respectively with the magnesium ammonium phosphate into 210-841 microns (20-70 meshes); (2) adding the pulverized raw materials into a feeding port, setting a dosage ratio, carrying out mixing granulation according to a certain ratio, granulating, oven drying and cooling; (3) evenly spraying polyglutamic acid liquid according to a weight ratio of polyglutamic acid to magnesium ammonium phosphate of 1: 100 to 10000; (4) separately using or mixing one or more microbial agents of purchased or cultured *bacillus subtilis, trichoderma harzianum, rhizobium, bacillus thuringiensis* and *paecilomyces lilacinus,* evenly mixing and stirring the microbial agent with polyglutamic acid-magnesium ammonium phosphate granules, so that the effective viable count per gram of fertilizer is not less than 20 million (preferably not less than 200 million per gram of fertilizer); (5) oven drying the fertilizer granules; and (6) quantitatively packaging to obtain the granular compound microbial fertilizer.

In the processing technical solution, according to the actual soil structure and different crop growth requirements, organic matters can be added after step 4, the content of the organic matters is higher than 8%, and the organic matters are preferably cellulose, hemicellulose, protein and humic acid.

In a powder processing solution, the method includes the following steps: (1) according to the requirements of crops, selecting a proper amount of macro elements, medium elements or trace elements types, and pulverizing respectively with the magnesium ammonium phosphate into 210-841 microns (20-70 meshes); (2) adding the pulverized raw materials into a feeding port, setting a dosage ratio, and evenly stirring according to a certain ratio; (3) evenly spraying polyglutamic acid liquid according to a weight ratio of polyglutamic acid to magnesium ammonium phosphate of 1: 100 to 10000; (4) separately using or mixing one or more microbial agents of purchased or cultured *bacillus subtilis, trichoderma harzianum, rhizobium, bacillus thuringiensis* and *paecilomyces lilacinus,* evenly mixing and stirring the microbial agent with polyglutamic acid-magnesium ammonium phosphate granules, so that the effective viable count per gram of fertilizer is not less than 20 million (preferably not less than 200 million per gram of fertilizer); (5) oven drying the fertilizers; and (6) quantitatively packaging to obtain the compound microbial fertilizer powder.

In the processing technical solution, according to the actual soil structure and different crop growth requirements, organic matters can be added after step 4, the content of the organic matters is higher than 8%, and the organic matters are preferably cellulose, hemicellulose, protein and humic acid.

The polyglutamic acid and the magnesium ammonium phosphate in the composition disclosed by the present invention have mutual synergistic promotion effects as follows: 1. the present invention can improve the balance of acidic soils. Most of the traditional nitrogen and phosphorus fertilizers are acid fertilizers, and long-term application can increase the acidity of soil and cause crop yield reduction or nutrient deficiency. In the present invention, the combination of polyglutamic acid and magnesium ammonium phosphate can effectively reduce soil nitrogen leaching loss, and has the effects of relieving soil acidification and the like. The slow control effect of polyglutamic acid can obviously reduce nitrogen leaching loss of magnesium ammonium phosphate, the release amount of $N_2O$ can be obviously reduced, more lasting effective nutrients can be provided for the growth of plants, the release of $NH_3$-N in magnesium ammonium phosphate sediment is relatively slow, and the leaching amount of $NH_3$-N is gradually reduced. After being applied into the soil, the nitrogen and phosphorus leaching amount of the magnesium ammonium phosphate is obviously lower than that of other fertilizers, especially nitrogen leaching, and the pH value of the soil is increased to a certain extent, so that the pH value of the soil can be increased; 2. fertilizer-in-water is realized, the fertilizer and water are integrated, so that the loss of water and fertilizer is reduced, and the stress tolerance of crops is improved; 3. trace elements are chelated. In the application process of the conventional fertilizer, the utilization rate is not high, and the absorption and utilization of magnesium ammonium phosphate by crops can be improved by adding polyglutamic acid; 4. the photosynthesis efficiency of the plants is improved. The fertilizer disclosed by the present invention can increase the leaf area of crops, thereby increasing the photosynthesis efficiency of the crop leaves; and 5. the slow release and slow control effects are good. The magnesium ammonium phosphate has certain slow release property, the polyglutamic acid is also a good slow release agent, through the combination of the polyglutamic acid and the magnesium ammonium phosphate, the slow release rate of the magnesium ammonium phosphate can be better adjusted, and the combination of the polyglutamic acid and the magnesium ammonium phosphate has a good environmental effect.

## DETAILED DESCRIPTION

To make the objectives, the technical solutions, and the advantages of the present invention clearer, the following further describes the present invention in detail with reference to the embodiments. It should be understood that the specific embodiments described herein are merely used to explain the present invention, and are not intended

to limit the present invention.

The percentages in all formulations of the following embodiments are in weight percent (converted to 100%). Various processing technologies of the composite fertilizer are the prior art, and can be changed according to different conditions.

I. Embodiments

(I) Fertilizers prepared by a processing method of a solid preparation in the present specification and fertilizer efficiency experiments thereof

1. Fertilizers prepared by the processing method of the solid preparation in the present specification (Table 1)

| Embodiment | Ingredients and contents contained | | Proportioning | Dosage form |
|---|---|---|---|---|
| | Polyglutamic acid | Magnesium ammonium phosphate | | |
| Embodiment 1 | 20 g | 2 kg | 1 : 100 | Powder |
| Embodiment 2 | 10 g | 2 kg | 1 : 200 | Powder |
| Embodiment 3 | 20 g | 5 kg | 1 : 250 | Powder |
| Embodiment 4 | 10 g | 5 kg | 1 : 500 | Powder |
| Embodiment 5 | 10 g | 10 kg | 1 : 1000 | Powder |
| Embodiment 6 | 10 g | 15 kg | 1 : 1500 | Powder |
| Embodiment 7 | 12 g | 9.6 kg | 1 : 800 | Powder |
| Embodiment 8 | 12 g | 12kg | 1 : 1000 | Powder |
| Embodiment 9 | 10 g | 20 kg | 1 : 2000 | Granules |
| Embodiment 10 | 10 g | 30 kg | 1 : 3000 | Granules |
| Embodiment 11 | 10 g | 40 kg | 1 : 4000 | Granules |
| Embodiment 12 | 15 g | 75 kg | 1 : 5000 | Granules |
| Embodiment 13 | 18 g | 108 kg | 1 : 6000 | Granules |
| Embodiment 14 | 18 g | 126 kg | 1 : 7000 | Granules |
| Embodiment 15 | 16 g | 128 kg | 1 : 8000 | Granules |
| Embodiment 16 | 14.22 g | 128 kg | 1 : 9000 | Granules |

2. Field fertilizer efficiency experiment

(1) The solid fertilizers prepared in Embodiments 1-8 of the present invention were used to verify the growth and yield-increasing effects on tobaccos.

Variety Yunnan tobacco PVH1452, tested in Group 2, Hetou Village, Longshan Town, Longling County, Yunnan Province, had moderate fertility, pH 5.31, organic matter 3.51%, available nitrogen 121.5 mg/kg, available phosphorus 35.18 mg/kg, available potassium 82.6 mg/kg, available zinc 1.8 mg/kg, exchangeable calcium 640 mg/kg and exchangeable magnesium 24.2 mg/kg.

Application amount: the composite fertilizer of the present invention was used in an amount of 10 kilograms per mu, the control fertilizer magnesium ammonium phosphate was used separately in an amount of 10 kilograms per mu, and the polyglutamic acid was used separately in an amount of 10 g, 50 g and 100 g per mu respectively. Other

fertilizers were applied at a standard 90 kg/hm$^2$ of pure nitrogen, m(N):m($P_2O_5$):m($K_2O$)=1:1:2. Randomized block design was repeated 3 times. The plot area was 40 m$^2$ and the distance between row and hill was 1.0 m * 0.4 m. Protection rows were arranged around the plot. The composite fertilizer disclosed by the present invention was applied at one time along with other base fertilizers.

The leaf color and growth of tobacco seedlings 12 days after transplantation were observed, and the leaf thickness, the number of effective leaves per plant, the weight of fresh leaves per leaf and the proportion of high-quality tobacco were observed. After each treated tobacco plant was toped, 15 representative tobacco plants were selected, and marked as observation plants, each of the tobacco plant was marked at four lower leaves, four middle leaves and four upper leaves for biological characteristic investigation, and the fresh weight of a single leaf was investigated during harvesting; the number of the effective leaves per plant was investigated before harvesting for primary curing. The marked leaves and non-marked leaves in each plot were respectively collected, baked and graded. The number of tobacco plants harvested was investigated before the primary curing and used to calculate the yield. The fresh weight was obtained immediately after the tobacco leaves were harvested, and the leaves were then hung grading tags for baking. During grading, the weight and the number of leaves of each grade of tobacco leaves were recorded in time, each of the marked leaves was graded, then bundled according to plots and sites as a sample for analysis, and then the average yield of dry tobacco leaves and the proportion of high-quality and medium quality tobacco leaves were counted. At the same time, the stress tolerance of tobacco growth (i.e., the occurrence degree of tobacco black shank) was monitored.

Leaf thickness: leaf thickness relative to normal (CK).

Table 2. Summary table of experiment data for tobacco growth promotion of embodiments of the present invention

| Embodiment | 12 days after transplantation | | 5 days after topping | | Leaf Thickness | Number of effective leaves per plant | Fresh leaf weight per plant (kg) | Proportion of high-quality and medium quality tobacco leaves (%) | Occurrence degree of tobacco black shank |
|---|---|---|---|---|---|---|---|---|---|
| | Leaf color | Growth | Leaf color | Growth | | | | | |
| Embodiment 1 | Dark | Strong | Dark green | Strong | Relatively thick | 21.2 | 6.3 | 88.5 | None |
| Embodiment 2 | Dark | Strong | Dark green | Strong | Relatively thick | 21.5 | 6.2 | 88.6 | None |
| Embodiment 3 | Dark | Strong | Dark green | Strong | Relatively thick | 22.0 | 6.4 | 89.0 | None |
| Embodiment 4 | Dark | Strong | Dark green | Strong | Relatively thick | 22.1 | 6.7 | 89.6 | None |
| Embodiment 5 | Dark | Strong | Dark green | Strong | Relatively thick | 22.4 | 6.5 | 89.2 | None |
| Embodiment 6 | Dark | Strong | Dark green | Strong | Relatively thick | 22.5 | 6.8 | 90.1 | None |
| Embodiment 7 | Dark | Strong | Dark green | Strong | Relatively thick | 23.0 | 6.3 | 88.5 | None |
| Embodiment 8 | Dark | Strong | Dark green | Strong | Relatively thick | 21.2 | 6.6 | 89.3 | None |
| Magnesium ammonium phosphate | Shallow | Relatively weak | Light green | Medium | Normal | 20.5 | 5.8 | 86.3 | Light |
| Polyglutamic acid 10 g/mu | Shallow | Relatively weak | Yellow green | Relatively weak | Relatively thin | 20.0 | 5.5 | 85.5 | Moderate |
| Polyglutamic acid 50 g/mu | Shallow | Relatively weak | Yellow green | Relatively weak | Relatively thin | 20.3 | 5.4 | 85.8 | Light |
| Polyglutamic acid 100g/mu | Light green | Strong | Yellow green | Medium | Relatively thin | 20.6 | 5.6 | 86.0 | Light |

(continued)

| Embodiment | 12 days after transplantation | | 5 days after topping | | Leaf Thickness | Number of effective leaves per plant | Fresh leaf weight per plant (kg) | Proportion of high-quality and medium quality tobacco leaves (%) | Occurrence degree of tobacco black shank |
|---|---|---|---|---|---|---|---|---|---|
| | Leaf color | Growth | Leaf color | Growth | | | | | |
| Normal (CK) | Light green | Weak | The leaf vein is yellow green and the leaf is whitish | Weak | Relatively thin | 19.2 | 5.1 | 78.2 | Severe |

As can be seen from the experimental results in Table 2, the combined application of magnesium ammonium phosphate and polyglutamic acid can promote the growth of tobacco plants to be more strong, increase the weight per leaf of fresh tobacco, increase the number of effective leaves per plant and increase the yield and quality of tobacco leaves. Separate application of magnesium ammonium phosphate and polyglutamic acid was less effective. The polyglutamic acid and the magnesium ammonium phosphate have good synergism, the polyglutamic acid can reduce the loss of the magnesium ammonium phosphate in soil and effectively promote the absorption and conversion utilization of the magnesium ammonium phosphate by crops. When magnesium ammonium phosphate is applied alone, the tobacco plants absorb magnesium ions slowly, the utilization rate is low, the tobacco leaves are light green, and the theoretical application effect is not achieved. When polyglutamic acid is applied alone, the polyglutamic acid cannot replace magnesium, although the polyglutamic acid can promote the function of absorbing part of magnesium ions in soil of the tobacco plants, if the magnesium ions in the soil are insufficient, the tobacco plants will still be in nutrient deficiency, and therefore the tobacco leaves applied with the polyglutamic acid in the experiment are yellow green and in slight magnesium deficiency. However, the conventional control was completely labeled as magnesium deficiency of tobacco plants, the lower leaves turned from green to yellow, the edges and tips of leaves began to turn yellow and extend upward, for some tobacco plants suffering from serious magnesium deficiency, except the veins of leaves remained green and yellow green, the leaves all turned white, and the tips of leaves suffered from brown necrosis.

(2) The solid fertilizers prepared in Embodiments 9-16 of the present invention were used to verify the growth and yield-increasing effects on panax notoginseng.

The experiment was carried out in a panax notoginseng planting base in Gumu Town, Wenshan City, Yunnan Province. Soil fertility was moderate, pH 5.54, organic matter 9.42 mg/kg, available nitrogen 112.4 mg/kg, available phosphorus 14.35 mg/kg, available potassium 65.2 mg/kg, available zinc 2.1 mg/kg, exchangeable calcium 523 mg/kg, and exchangeable magnesium 15.6 mg/kg.

Application amount: the composite fertilizer of the present invention was used in an amount of 100 kilograms per mu, the control fertilizer ammonium magnesium phosphate was used separately in an amount of 100 kilograms per mu, polyglutamic acid was used separately in an amount of 15 g, 30 g and 60 g per mu respectively, other nitrogen and phosphorus fertilizers were not applied, and the conventional potassium fertilizer and the conventional trace element fertilizer were used in the later period. Randomized block design was repeated 3 times. The plot area was 20 $m^2$ (4 m * 5 m). The fertilizer of the present invention was evenly mixed with the conventional fertilizer and then was spread.

During the growing process of the panax notoginseng, the plant height and stem base diameter of the panax notoginseng plant were traced and measured and the leaf area was measured, and the fresh yield and weight of stem leaves and root tubers were measured after harvesting. The weight, yield-increasing rate and dry weight ratio of root tubers of panax notoginseng were determined after oven drying.

$$\text{Yield-increasing rate\%} = (\text{harvested weight of actually treated plot} - \text{harvested weight of control plot}) / \text{harvested weight of control plot} * 100\%$$

$$\text{Dry weight ratio (\%)} = \text{dry weight} / \text{fresh weight} * 100\%$$

Table 3. Summary table of experiment data for panax notoginseng growth promotion of embodiments of the present invention

| Embodiment | 5 days before digging | | Fresh yield (kg/mu) | | | Dry yield (kg/mu) | | |
|---|---|---|---|---|---|---|---|---|
| | Plant height (cm) | Stem base diameter (mm) | Leaf area ($cm^2$) | Stem leaf | Root tuber | Root tuber | Yield-increasing rate (%) | Dry weight ratio (%) |
| Embodiment 9 | 36.38 | 6.88 | 225.25 | 164.41 | 386.24 | 115.12 | 41.44 | 29.81 |
| Embodiment 10 | 38.05 | 7.21 | 231.37 | 166.52 | 423.98 | 126.08 | 54.91 | 29.74 |
| Embodiment 11 | 37.59 | 6.97 | 226.14 | 162.73 | 401.15 | 118.42 | 45.50 | 29.52 |
| Embodiment 12 | 36.85 | 7.02 | 229.19 | 168.98 | 405.18 | 121.68 | 49.50 | 30.03 |
| Embodiment 13 | 37.13 | 6.92 | 222.36 | 156.37 | 379.01 | 114.49 | 40.67 | 30.21 |
| Embodiment 14 | 37.02 | 6.87 | 228.05 | 167.29 | 392.17 | 120.84 | 48.47 | 30.81 |

(continued)

| Embodiment | 5 days before digging | | Fresh yield (kg/mu) | | | Dry yield (kg/mu) | | |
|---|---|---|---|---|---|---|---|---|
| | Plant height (cm) | Stem base diameter (mm) | Leaf area ($cm^2$) | Stem leaf | Root tuber | Root tuber | Yield-increasing rate (%) | Dry weight ratio (%) |
| Embodiment 15 | 36.17 | 6.94 | 224.38 | 162.07 | 384.39 | 116.51 | 43.15 | 30.31 |
| Embodiment 16 | 36.15 | 6.82 | 221.74 | 160.53 | 380.97 | 112.38 | 38.08 | 29.50 |
| Magnesium ammonium phosphate single agent | 34.23 | 6.61 | 200.15 | 135.59 | 341.84 | 94.29 | 15.85 | 27.58 |
| Polyglutamic acid 15 g/mu | 33.18 | 6.41 | 188.19 | 117.43 | 315.85 | 85.74 | 5.34 | 27.15 |
| Polyglutamic acid 30 g/mu | 33.61 | 6.48 | 191.02 | 125.37 | 322.98 | 87.56 | 7.58 | 27.11 |
| Polyglutamic acid 60 g/mu | 34.05 | 6.57 | 198.51 | 130.65 | 331.72 | 92.03 | 13.07 | 27.74 |
| Normal (CK) | 31.17 | 6.35 | 184.38 | 111.34 | 310.91 | 81.39 | -- | 26.18 |

As can be seen from the experimental results in Table 3, when magnesium ammonium phosphate and polyglutamic acid were applied together, the plant height of the panax notoginseng plant can be increased, the stem base can be increased, and therefore the lodging resistance of the panax notoginseng can be improved. Meanwhile, the leaf area of the panax notoginseng is obviously increased by the composite fertilizer, the photosynthesis efficiency is improved, and the effect of increasing the yield is achieved. Separate application of magnesium ammonium phosphate and polyglutamic acid was less effective.

(II) Composite fertilizers prepared by the processing method of the solid preparation in the present specification and fertilizer efficiency experiments thereof

1. Granular composite fertilizer and composite fertilizer powder prepared by the processing method of the solid preparation in the present specification (Table 4)

| Embodiment | Ingredients and contents contained | | | | | Dosage form |
|---|---|---|---|---|---|---|
| | Polyglutamic acid | Magnesium ammonium phosphate | Bacteria and effective viable count | | Organic matter and content | |
| | | | Bacteria | Effective viable count (in 100 million/gram) | | |
| Embodiment 17 | 10 | 2000 | *Bacillus subtilis* | 500 | Humic acid, 40% | Powder |
| Embodiment 18 | 10 | 4000 | *Trichodernea harzianum* | 500 | Cellulose, 40% | Granules |
| Embodiment 19 | 10 | 5000 | *Bacillus subtilis* + *Trichodernea harzianum* | 400 + 100 | Protein, 40% | Granules |
| Embodiment 20 | 10 | 7000 | *Trichoderma harzianum* | 200 | Peat, 30% | Powder |
| Embodiment 21 | 10 | 9000 | *Bacillus subtilis* | 200 | Cellulose, 30% | Powder |

(continued)

| Embodiment | Ingredients and contents contained | | | | | Dosage form |
|---|---|---|---|---|---|---|
| | Polyglutamic acid | Magnesium ammonium phosphate | Bacteria and effective viable count | | Organic matter and content | |
| | | | Bacteria | Effective viable count (in 100 million/gram) | | |
| Embodiment 22 | 10 | 10000 | *Bacillus subtilis* + *Trichodernea harzianum* | 130 + 70 | Humic acid, 30% | Powder |
| Embodiment 23 | 10 | 20000 | *Bacillus subtilis* | 100 | Protein, 20% | Granules |
| Embodiment 24 | 12 | 30000 | *Trichodernea harzianum* | 100 | Humic acid, 20% | Powder |
| Embodiment 25 | 12 | 40000 | *Bacillus subtilis* + *Trichodernea harzianum* | 20 + 80 | Cellulose, 20% | Granules |
| Embodiment 26 | 12 | 50000 | *Bacillus subtilis* | 50 | Peat, 15% | Granules |
| Embodiment 27 | 12 | 60000 | *Trichoderma harzianum* | 50 | Peat, 15% | Powder |
| Embodiment 28 | 12 | 70000 | *Bacillus subtilis* + *Trichodernea harzianum* | 40 + 10 | Peat, 15% | Granules |
| Embodiment 29 | 12 | 80000 | *Trichoderma harzianum* | 5 | Humic acid, 8% | Granules |
| Embodiment 30 | 12 | 90000 | *Bacillus subtilis* | 5 | Cellulose, 8% | Granules |
| Embodiment 31 | 12 | 100000 | *Bacillus subtilis* + *Trichodernea harzianum* | 1 + 1 | Protein, 8% | Granules |
| Embodiment 32 | 12 | 120000 | *Bacillus subtilis* + *Trichodernea harzianum* | 1 + 1 | Humic acid, 8% | Powder |

2. Field fertilizer efficiency verification experiment of the present invention

(1) The embodiments prepared by the present invention were used for verifying the yield-increasing experiment for lycium barbarum.

The experimentwas carried out in an organic lycium barbarum planting base in Yuanzhou District, Guyuan City, Ningxia Hui Autonomous Region. PH value of the tested soil was 5.41, organic matter content was 3.13%, total nitrogen content was 0.216%, total phosphorus content was 0.16%, total potassium content was 6.52%, available nitrogen content was 47.31 mg/kg, available phosphorus content was 11.23 mg/kg, and available potassium content was 167.32 mg/kg. The tested variety of lycium barbarum was 'NINGQI No. 7', the tree was 5 years old, the distance between row and hill was 2 m, and generally, the overall tree vigor was substantially balanced.

The base fertilizer was applied with other conventional fertilizers using an annular furrow application method (i.e., an annular furrow of 70 cm wide and 60 cm deep was excavated 40 cm from the root neck of the tree). The fertilizer of the present invention was applied in an amount of 50 kg per mu. The control treatment magnesium ammonium phosphate was separately applied in an amount of 50 kilograms per mu, polyglutamic acid was separately applied in an amount of 50 g, 100g and 200 g per mu respectively, and microbial agents of bacillus subtilis, trichoderma harzianum and a mixture of *bacillus subtilis* and *trichoderma harzianum* were separately applied in an amount of 50 kilograms (the

effective viable count was greater than 2 billion/gram). Three plants were selected for each treatment, repeated three times, each plot was randomly arranged, and other field management measures were consistent. In the experiment, the marked plants were selected, hung with labels, the weight of each treatment on lycium barbarum hair root system (weighing after oven drying), the weight of one hundred fresh fruits were measured one by one from bottom to top, the growth of lyceum barbarum fruits was observed, the yield per mu of the fresh fruits was measured, and the disease condition of each treatment was investigated.

Table 5. Effect of the composite fertilizer prepared in the embodiments of the present invention on growth and yield increase of lycium barbarum

| Embodiment | Leaf color | Plant height (cm) | Root dry mass (g/plant) | Weight of one hundred fresh fruits (g) | Fresh fruit harvesting amount | | Polysaccharide content (%) | Occurrence of root rot |
|---|---|---|---|---|---|---|---|---|
| | | | | | Yield (kg/mu) | Yield-increasing rate (%) | | |
| Embodiment 17 | Dark green | 131.3 | 362.3 | 150.6 | 3508.2 | 45.7 | 41.93 | Not occurred |
| Embodiment 18 | Dark green | 129.1 | 366.1 | 152.7 | 3621.7 | 50.4 | 42.17 | Not occurred |
| Embodiment 19 | Dark green | 130.8 | 358.2 | 148.9 | 3567.8 | 48.1 | 40.18 | Not occurred |
| Embodiment 20 | Dark green | 126.5 | 359.4 | 149.6 | 3507.2 | 45.6 | 41.34 | Not occurred |
| Embodiment 21 | Dark green | 128.8 | 342.9 | 147.8 | 3481.1 | 44.5 | 40.14 | Not occurred |
| Embodiment 22 | Dark green | 125.2 | 347.6 | 142.9 | 3413.5 | 41.7 | 42.07 | Not occurred |
| Embodiment 23 | Dark green | 126.7 | 339.8 | 138.2 | 3352.9 | 39.2 | 41.69 | Not occurred |
| Embodiment 24 | Dark green | 124.5 | 341.3 | 132.9 | 3241.4 | 34.6 | 40.23 | Not occurred |
| Embodiment 25 | Dark green | 122.4 | 338.5 | 130.8 | 3207.5 | 33.2 | 42.31 | Not occurred |
| Magnesium ammonium phosphate | Green | 113.8 | 288.9 | 108.5 | 3037.4 | 26.1 | 38.57 | Significantly occurred |
| Polyglutamic acid 50 g/mu | Green | 107.5 | 271.5 | 97.8 | 2736.7 | 13.6 | 37.26 | Significantly occurred |
| Polyglutamic acid 100 g/mu | Green | 111.4 | 285.3 | 105.9 | 2841.1 | 18.0 | 38.19 | Slightly occurred |
| Polyglutamic acid 200 g/mu | Green | 115.7 | 298.7 | 109.3 | 2908.8 | 20.8 | 38.24 | Slightly occurred |

(continued)

| Embodiment | Leaf color | Plant height (cm) | Root dry mass (g/plant) | Weight of one hundred fresh fruits (g) | Fresh fruit harvesting amount | | Polysaccharide content (%) | Occurrence of root rot |
|---|---|---|---|---|---|---|---|---|
| | | | | | Yield (kg/mu) | Yield-increasing rate (%) | | |
| *Bacillus subtilis* | Green | 106.8 | 277.5 | 106.2 | 2607.0 | 8.2 | 38.08 | Slightly occurred |
| *Trichoderma harzianum* | Green | 108.3 | 286.5 | 104.2 | 2568.9 | 6.7 | 38.54 | Slightly occurred |
| *Bacillus subtilis* + *Trichoderma harzianum* | Green | 109.5 | 279.8 | 103.5 | 2797.6 | 16.2 | 38.38 | Slightly occurred |
| Normal (CK) | Light green | 101.6 | 257.7 | 92.8 | 2408.5 | -- | 36.97 | Severely occurred |

As can be seen from the experimental results in Table 5, co-application of magnesium ammonium phosphate, polyglutamic acid and microbial agents can improve the growth of lycium barbarum plants, mainly in improving the plant height of lycium barbarum, increasing the number of root hairs (root dry mass) of lycium barbarum, facilitating the nutrient absorption and transmission of root systems, and forming a benign circular growth of lycium barbarum. The composite fertilizer disclosed by the present invention can increase the single seed of lycium barbarum, increase the yield of lycium barbarum, obviously improve the sugar content of lycium barbarum, improve the variety of lycium barbarum, has a good control effect on soil-borne diseases of lycium barbarum, and reduces the application amount of pesticides. Separate application of magnesium ammonium phosphate and polyglutamic acid was general in effect.

(2)The embodiments prepared by the present invention were used for verifying the yield-increasing effect on citrus

The experiment was carried out in a citrus orchard in Huashu township, Kecheng District, Quzhou City, Zhejiang Province. PH value of the tested soil was 5.7, organic matter 12.4 mg/kg, total nitrogen 2.6 mg/kg, available phosphorus 12.1 mg/kg, and available potassium 101 mg/kg. The tested crop variety was "HONGMEIREN". Four treatments were arranged for the experiment and repeated three times. 5 citrus trees per plot with an area of 40 $m^2$. The fertilizer of the present invention was applied in an amount of 6 kg/plant, the magnesium ammonium phosphate was separately applied in an amount of 6 kg/plant, the polyglutamic acid was separately applied in an amount of 0.5 g/plant, 1.0 g/plant and 1.5 g/plant respectively, and microbial agents of bacillus subtilis, *trichoderma harzianum* and a mixture of *bacillus subtilis* and *trichoderma harzianum* were separately applied in an amount of 6 kg/plant (the effective viable count was greater than 2 billion/gram). Except fertilization, other field management was consistent. The growth of citrus was observed, and the yield, quality and disease of citrus were determined.

Table 6. Effect of the composite fertilizer prepared by the embodiments of the present invention on citrus growth and yield increase

| Embodiment | Leaf color | Tree vigor | Sprout heading | Fruit diameter (mm) | Fruit skin | Sugar content (%) | Soluble solids (%) | Converted yield (kg/mu) | Occurrence of root rot |
|---|---|---|---|---|---|---|---|---|---|
| Embodiment 26 | Thickening of dark green leaves | Strong | A large amount | 78.1 | Thin skin with gloss | 14.6 | 12.7 | 4504.5 | Not occurred |
| Embodiment 27 | Thickening of dark green leaves | Strong | A large amount | 77.5 | Thin skin with gloss | 14.7 | 12.9 | 4497.2 | Not occurred |
| Embodiment 28 | Thickening of dark green leaves | Strong | A large amount | 78.2 | Thin skin with gloss | 15.1 | 12.6 | 4471.8 | Not occurred |
| Embodiment 29 | Thickening of dark green leaves | Strong | A large amount | 77.6 | Thin skin with gloss | 14.8 | 12.8 | 4395.7 | Not occurred |
| Embodiment 30 | Dark green | Strong | A large amount | 76.9 | Thin skin with gloss | 14.5 | 12.5 | 4319.5 | Not occurred |
| Embodiment 31 | Dark green | Relatively strong | Relatively more | 75.4 | Thin skin with gloss | 14.3 | 12.4 | 4267.1 | Not occurred |
| Embodiment 32 | Dark-green | Relatively strong | Relatively more | 74.8 | Thin skin with low gloss | 13.8 | 11.9 | 4231.9 | Not occurred |
| Magnesium ammonium phosphate | Green | General | Relatively more | 72.3 | Thick skin with low gloss | 12.9 | 11.6 | 3815.8 | Sporadically occurred |
| Polyglutamic acid 0.5 g/mu | Light green | General | Less | 68.4 | Thick skin with low gloss | 13.2 | 11.4 | 3654.1 | Sporadically occurred |
| 1.0g/mu of polyglutamic acid | Light green | General | Less | 69.2 | Thick skin with low gloss | 13.5 | 11.7 | 3782.5 | Sporadically occurred |
| Polyglutamic acid 1.5 g/mu | Green | Relatively strong | Relatively more | 70.9 | Thin skin with low gloss | 13.7 | 11.9 | 3802.4 | Sporadically occurred |
| *Bacillus subtilis* | Green | General | Less | 67.5 | Thick skin with low gloss | 13.1 | 11.2 | 3615.5 | Not occurred |
| *Trichoderma harzianum* | Green | General | Less | 66.8 | Thick skin with low gloss | 13.3 | 11.4 | 3576.8 | Not occurred |

(continued)

| Embodiment | Leaf color | Tree vigor | Sprout heading | Fruit diameter (mm) | Fruit skin | Sugar content (%) | Soluble solids (%) | Converted yield (kg/mu) | Occurrence of root rot |
|---|---|---|---|---|---|---|---|---|---|
| *Bacillus subtilis* + *Trichoderma harzianum* | Green | General | Relatively more | 70.3 | Thin skin with gloss | 13.6 | 11.6 | 3758.3 | Not occurred |
| Normal (CK) | Yellow green | Weak | Less | 65.4 | Thick skin with no gloss | 11.5 | 10.7 | 3586.5 | Severely occurred |

As can be seen from the experimental results in Table 6, the co-application of magnesium ammonium phosphate, polyglutamic acid and microbial agent can promote the growth of citrus and increase the yield and quality thereof. According to the present invention, the tree vigor of the citrus tree can be promoted to be strong, the production is high, the leaf color is dark green, the number of sprout heading is increased, the number of high-quality fruits is increased, the color and luster are good, the skin is thin and glossy, the tree vigor of the citrus tree is strong, the number of headed young sprouts is great and the young sprouts are strong, the quality of the citrus can be greatly improved, and meanwhile the occurrence of soil-borne diseases can be reduced.

## Claims

1. A composite fertilizer, comprising two functional components of polyglutamic acid and magnesium ammonium phosphate, wherein a weight ratio of the polyglutamic acid to the magnesium ammonium phosphate is 1: 100 to 10,000.

2. The composite fertilizer according to claim 1, wherein a weight ratio of the polyglutamic acid to the magnesium ammonium phosphate is 1: 150 to 8,000; preferably 1: 200 to 8,000.

3. The composite fertilizer according to claim 1 or 2, further comprising one or more microbial agent components.

4. The composite fertilizer according to claim 3, wherein the microbial agent is selected from the group consisting of *bacillus subtilis, trichoderma harzianum, rhizobium, bacillus thuringiensis,* and *paecilomyces lilacinus;* and preferably selected from the group consisting of *bacillus subtilis* and *trichoderma harzianum.*

5. The composite fertilizer according to claim 3 or 4, wherein a total effective viable count of microbial bacteria is greater than 20 million/gram; preferably the total effective viable count of the microbial bacteria is greater than 200 million/gram, and further preferably the total effective viable count of the microbial bacteria is greater than 1 billion/gram.

6. The composite fertilizer according to any one of claims 3-5, further comprising an organic matter.

7. The composite fertilizer according to claim 6, wherein a content of the organic matter is greater than 8%; and preferably greater than 20%.

8. The composite fertilizer according to any one of claims 1-7, wherein the fertilizer is a solid composite fertilizer.

9. The composite fertilizer according to any one of claims 1-8, wherein the composite fertilizer is applied as a base fertilizer or topdressing.

10. Use of a composite fertilizer according to any one of claims 1 to 9 in increasing yield of crops.

## Patentansprüche

1. Zusammengesetzter Dünger, umfassend zwei funktionelle Komponenten aus Polyglutaminsäure und Magnesiumammoniumphosphat, wobei ein Gewichtsverhältnis von Polyglutaminsäure zu Magnesiumammoniumphosphat 1: 100 bis 10.000 beträgt.

2. Zusammengesetzter Dünger nach Anspruch 1, wobei ein Gewichtsverhältnis von Polyglutaminsäure zu Magnesiumammoniumphosphat 1: 150 bis 8.000; vorzugsweise 1: 200 bis 8.000, beträgt.

3. Zusammengesetzter Dünger nach Anspruch 1 oder 2, weiterhin umfassend eine oder mehrere mikrobielle Wirkstoffkomponenten.

4. Zusammengesetzter Dünger nach Anspruch 3, wobei die mikrobielle Wirkstoffkomponente ausgewählt ist aus der Gruppe, bestehend aus *Bacillus subtilis, Trichoderma harzianum, Rhizobium, Bacillus thuringiensis* und *Paecilomyces lilacinus;* und vorzugsweise ausgewählt ist aus der Gruppe, bestehend aus *Bacillus subtilis* und *Trichoderma harzianum.*

5. Zusammengesetzter Dünger nach Anspruch 3 oder 4, wobei eine effektive Gesamtkeimzahl mikrobieller Bakterien

mehr als 20 Millionen/Gramm beträgt; vorzugsweise die effektive Gesamtkeimzahl der mikrobiellen Bakterien mehr als 200 Millionen/Gramm beträgt, und weiterhin vorzugsweise die effektive Gesamtkeimzahl der mikrobiellen Bakterien mehr als 1 Milliarde/Gramm beträgt.

**6.** Zusammengesetzter Dünger nach einem der Ansprüche 3-5, weiterhin umfassend ein organisches Material.

**7.** Zusammengesetzter Dünger nach Anspruch 6, wobei ein Gehalt des organischen Materials mehr als 8%; und vorzugsweise mehr als 20% beträgt.

**8.** Zusammengesetzter Dünger nach einem der Ansprüche 1-7, wobei der Dünger ein fester zusammengesetzter Dünger ist.

**9.** Zusammengesetzter Dünger nach einem der Ansprüche 1-8, wobei der zusammengesetzte Dünger als ein Grunddünger oder Topdressing angewandt wird.

**10.** Verwendung eines zusammengesetzten Düngers nach einem der Ansprüche 1 bis 9 zur Steigerung des Ertrags von Kulturpflanzen.

## Revendications

**1.** Engrais composite, comprenant deux composants fonctionnels de poly(acide glutamique) et de phosphate de magnésium et d'ammonium, dans lequel le rapport en poids du poly(acide glutamique) au phosphate de magnésium et d'ammonium est de 1/100 à 10 000.

**2.** Engrais composite selon la revendication 1, dans lequel le rapport en poids du poly(acide glutamique) au phosphate de magnésium et d'ammonium est de 1/150 à 8 000, de préférence de 1/200 à 8 000.

**3.** Engrais composite selon la revendication 1 ou 2, comprenant en outre un ou plusieurs composants agents microbiens.

**4.** Engrais composite selon la revendication 3, dans lequel l'agent microbien est choisi dans le groupe constitué par *Bacillus subtilis, Trichoderma harzianum, Rhizobium, Bacillus thuringiensis,* et *Paecilomyces litacinus* ; et de préférence choisi dans le groupe constitué par *Bacillus subtilis* et *Trichoderma harzianum.*

**5.** Engrais composite selon la revendication 3 ou 4, dans lequel le compte viable effectif total de bactéries microbiennes est supérieur à 20 millions/gramme ; de préférence le compte viable effectif total de bactéries microbiennes est supérieur à 200 millions/gramme, et mieux encore le compte viable effectif total de bactéries microbiennes est supérieur à 1 milliard/gramme.

**6.** Engrais composite selon l'une quelconque des revendications 3 à 5, comprenant en outre une matière organique.

**7.** Engrais composite selon la revendication 6, dans lequel la teneur en la matière organique est supérieure à 8 % ; et de préférence supérieure à 20 %.

**8.** Engrais composite selon l'une quelconque des revendications 1 à 7, lequel engrais est un engrais composite solide.

**9.** Engrais composite selon l'une quelconque des revendications 1 à 8, lequel engrais composite est appliqué en tant qu'engrais de base ou en tant que couverture.

**10.** Utilisation d'un engrais composite selon l'une quelconque des revendications 1 à 9 pour augmenter le rendement de cultures.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 105432291 A
- CN 103172437 B
- CN 101391928 B
- CN 104163711 A